# EUROPÄISCHE PATENTSCHRIFT

(11) **EP 3 812 604 B1**
(45) Veröffentlichungstag und Bekanntmachung des Hinweises auf die Patenterteilung: **01.12.2021**
(21) Anmeldenummer: 19205395.7
(22) Anmeldetag: 25.10.2019
(51) Int. Cl.: F16D 1/10, F16D 1/116, F16D 1/112

(54) **FORMSCHLÜSSIGE VERBINDUNG ZWEIER KOMPONENTEN, INSBESONDERE WELLE-NABE VERBINDUNG**
POSITIVE CONNECTION BETWEEN TWO COMPONENTS, ESPECIALLY A SHAFT-HUB CONNECTION
LIAISON PAR COMPLÉMENTARITÉ DE FORME DE DEUX COMPOSANTS, EN PARTICULIER LIAISON ARBRE-MOYEU

(43) Veröffentlichungstag der Anmeldung: 28.04.2021
(73) Patentinhaber: WILO SE, 44263 Dortmund (DE)
(72) Erfinder: Küster, Bernd, 44263 Dortmund (DE); Budy, Dominic, 44263 Dortmund (DE)
(74) Vertreter: Cohausz Hannig Borkowski Wißgott

(56) Entgegenhaltungen:
- WO-A1-2015/181080
- DE-A1- 2 035 788
- US-A1- 2010 120 545

## Beschreibung

Die Erfindung betrifft eine Befestigungskomponente zur formschlüssigen Verbindung mit einer Gegenkomponente durch axiales Fügen. Im Besonderen betrifft die Erfindung eine lösbare oder unlösbare Welle-Nabe Verbindung, beispielsweise zur Befestigung eines Laufrades einer Kreiselpumpe oder eines Lüfters.

Im Stand der Technik sind eine Vielzahl formschlüssiger Verbindungen zwischen zwei Komponenten bekannt. Beispielsweise beschreibt die Anmeldung US 2010/0120545 A1 ein Joch mit einer Nabe, in die eine Welle formschlüssig eingeführt wird, wobei in der Nabe ein federbelasteter Hebel einliegt, der im montierten Zustand der Welle in eine Ringnut der Welle hineinragt und nur gelöst werden kann, indem der von außen zugängliche Heben in die Nabe hineingeschwenkt wird. Eine Schnellkupplung für Gelenkwellen, insbesondere an Landmaschinen, ist aus der deutschen Offenlegungsschrift DE 2035788 A bekannt.

Bei formschlüssigen Verbindungen geht es häufig nicht allein um die Befestigung der einen an der anderen Komponente. Vielmehr dient der Formschluss auch der Übertragung mechanischer Kräfte. So werden bei einer Welle-Nabe Verbindung axiale, radiale und tangentiale Kräfte übertragen. In der Regel wird hierfür eine Nut-Feder Verbindung verwendet. Häufig sind in der Welle axiale Längsnuten vorgesehen, in welche korrespondierende Längsvorsprünge der Nabe formschlüssig eingreifen. Um die Nabe in axialer Richtung zu fixieren, werden ferner häufig zusätzliche Befestigungsmittel benötigt, wie z.B. Schrauben, Muttern, C-förmige Sicherungsringe etc. Deren Befestigung erfordert nicht nur zusätzlichen Aufwand, sondern auch geeignete Werkzeuge, so dass die Herstellung einer solchen formschlüssigen Verbindung zweier Komponenten umständlich und zeitaufwändig ist. Im Falle der Befestigung eines Laufrades auf einer Pumpenwelle liegen solche zusätzlichen Bauteile außerdem im Eintrittsbereich der Strömung in das Laufrad, und beeinträchtigen dort das Strömungsverhalten

Eine bekannte werkzeuglose Verbindungsart zwischen Welle und Nabe ist die sogenannte Kreiskeil-Verbindung, bei der sich drei oder mehr Innenkeile jeweils entlang eines Umfangsabschnitts der Welle und drei oder mehr korrespondierende Außenkeile entlang des Innenumfangs der Nabe erstrecken. Welle und Nabe werden zunächst in einer Winkelposition axial zusammengefügt, bei sich jeweils ein Anfang eines Außenkeils dem Ende eines Innenkeils - und umgekehrt- gegenüberliegen. Anschließend werden die beiden Komponenten gegeneinander verdreht, so dass die Keile aneinander gleiten und sich verspannen. Sehr hohe Kräfte können hier wirken.

Bei der Wahl der Verbindungsart ist u.a. auch die Materialpaarung zu berücksichtigen. Häufig ist die Welle aus Metall und die Nabe aus Kunststoff. Dünnwandige Bauteile aus Kunststoff, aber auch solche aus nicht polymeren Werkstoffen, beispielsweise aus nicht-polymeren Sinterwerkstoffen, weisen oft eine relativ niedrige Bruchdehnung bei Krafteinwirkung auf. Das bedeutet, dass sie sich unter der Einwirkung von Kräften nicht verformen, sondern brechen, also spröde sind. Dies führt zu Problemen bei Presspassungen, insbesondere bei Welle-Nabe-Verbindungen wie sie zum Beispiel bei Pumpenlaufrädern auf Motorwellen verwendet werden. Die Art der Welle-Naben-Verbindung und die entsprechende Krafteinleitung in das spröde Bauteil kann bei ungünstiger Auslegung der Nabe, z.B. bei dünnen Wandstärken, bei Kerbstellen und Ähnlichem, zu Problemen bzw. Bauteilbrüchen führen.

Dieses Problem verschärft sich dann, wenn die Welle-Nabe-Verbindung nach erstmaliger Montage seitens des Herstellers wiederholt demontiert und wieder montiert werden muss. Dies kann bei Wartungsarbeiten der Fall sein, beispielsweise im Falle von Trockenläufern, wenn die dynamische Dichtung (Gleitringdichtung) zwischen Laufrad und Motor erneuert werden muss. Im Gegensatz dazu sind bei Nassläuferpumpen die Laufräder häufig nur zerstörend demontierbar oder führen im Feld zu erhöhten Demontage-/ Montageaufwand.

Um eine Pressverbindung zwischen einer Metallwelle und einem Bauteil aus Kunststoff zu realisieren, beispielsweise einem hydraulischen Bauteil wie ein Pumpenlaufrad, werden häufig Metall-Inserts verwendet, die die Laufradnabe und damit den Formschluss zu Welle bilden. Das eigentliche Laufrad mit seiner Tragscheibe, den sich darauf erhebenden Laufradschaufeln und gegebenenfalls einer die Schaufeln abdeckenden Deckscheibe werden im Kunststoff-Spritzgussverfahren um das Metall-Insert herumgespritzt. Dies erfolgt zumeist in mehreren Spritzgießschritten nacheinander, um mit unterschiedlichen Kunststoffen verschiedene Funktionsbereiche des Laufrades auszubilden, oder um komplexe Geometrien, die nicht in einem einzigen Spritzgießschritt entformbar sind, herzustellen. Das Metall-Insert führt außerdem zu erhöhten Kosten bei der Herstellung des Laufrads.

Des Weiteren geht die Tendenz bei der Herstellung von Bauteilen zunehmend in Richtung einer additiven Fertigung. Zum Beispiel offenbart die Veröffentlichung WO 2015/181080 A1 die additive Herstellung von Laufradsegmenten zur Herstellung eines segmentierten Laufrads. Unter additiver Fertigung werden generative Herstellungsverfahren verstanden, die das Bauteil durch die Verfestigung einzelner Schichten erzeugen, was umgangssprachlich auch als 3D-Drucken bezeichnet wird. Diese Herstellungsverfahren ermöglichen eine enorme Gestaltungsfreiheit, weil Hinterschneidungen problemlos hergestellt werden können. Vor allem bietet sich diese Technologie bei geringen Stückzahlen an, bei denen sich der Bau der notwendigen Spritzgießwerkzeuge nicht lohnt. Gleichwohl ist die additive Fertigung bisher noch vergleichsweise teuer.

Die heutzutage additiv aus Kunststoff hergestellten Bauteile sind je nach verwendetem Polymerwerkstoff spröde und müssen deshalb hohe Wandstärken haben, um wirkende Kräften auszuhalten. Filigrane Bauteile, die Kräfte aufnehmen, können derzeit nicht mit ausreichender Festigkeit additiv gefertigt werden. Außerdem ist es technologiebedingt nicht oder nur mit hohem Aufwand möglich, Metall-Inserts zu verwenden. Möchte man ein Bauteil nicht durch ein konventionelles Massiv-Gußverfahren, sondern additiv bzw. generativ aus einem porösen Werkstoffgefüge fertigen, sind besondere Anforderungen an die Geometrie und Wandstärken zu stellen, damit kein Versagen bei Überbelastung während zum Teil undefinierter Montage und Demontagevorgänge vorkommt.

Es ist Aufgabe der vorliegenden Erfindung die vorgenannten Nachteile zu überwinden und eine neue Befestigungsart zur formschlüssig Verbindung einer Befestigungskomponente mit einer Gegenkomponente zu schaffen, die ohne zusätzliche Befestigungsmittel und ohne metallische Inserts auskommt, die werkzeuglos hergerichtet werden kann und eine additive Fertigung der Befestigungskomponente ermöglicht.

Diese Aufgabe wird durch eine Befestigungskomponente mit den Merkmalen des Anspruchs 1 gelöst. Vorteilhafte Weiterbildungen sind in den Unteransprüchen angegeben und werden nachfolgend erläutert.

Erfindungsgemäß wird eine Befestigungskomponente zur formschlüssigen Verbindung mit einer Gegenkomponente durch axiales Fügen vorgeschlagen, umfassend ein Gehäuseteil mit wenigstens einer offenen Kammer, in der zumindest ein Hebel einliegt, der in eine Verriegelungsposition mit der Gegenkomponente schwenkbar ist, wobei das Gehäuseteil und der Hebel in einem gleichzeitigen Herstellungsschritt durch ein additives Verfahren hergestellt sind.

Der Kern der vorliegenden Erfindung besteht somit darin, eine Komponente mit einem integrierten Verriegelungsmechanismus ausschließlich additiv herzustellen, mit anderen Worten 3D zu drucken. Die Komponente weist ein integriertes, d.h. mitgedrucktes, bewegbares Teil in Gestalt eines Hebels auf, welcher aus einer nichtverriegelnden Position, die ein axiales Fügen der Komponente mit einer Gegenkomponente zulässt, in eine verriegelnde Position schwenkbar ist, welche eine rotatorische und/ oder translatorische (axiale) Relativbewegung zwischen den beiden Komponenten verhindert. Dies erfolgt durch einen Formschluss, indem der Hebel in eine entsprechende Ausnehmung der Gegenkomponente eingreift. Der Hebel kann deshalb auch als Verriegelungshebel oder "Hebelkeil" bezeichnet werden.

Durch den integrierten Verriegelungsmechanismus ist es möglich, ein vergleichsweise empfindliches, 3D-gedruckte Bauteil direkt an einer Gegenkomponente zu befestigen, ohne das ein erhöhtes Bruchrisiko bei dem Bauteil besteht.

Aufgrund der direkten Integration des Verriegelungsmechanismusses in die Befestigungskomponente durch die additive Herstellung, ist keine Montage ihrer einzelnen Bauteile erforderlich. Der bewegliche Hebel muss nicht nachträglich in das Gehäuse eingesetzt werden. Er wird vielmehr sogleich mitgedruckt. Die Befestigungskomponente bildet insoweit bereits nach ihrer Herstellung eine fertige Baugruppe. Ein weiterer Vorteil des additiv gefertigten integrierten Verriegelungsmechanismusses liegt in der Einstückigkeit der Befestigungskomponente, wodurch Zusatzelemente wie Schrauben, Muttern, Sicherungsringe etc. überflüssig sind.

Es ist ferner vorteilhaft, dass der erfindungsgemäße Verriegelungsmechanismus sowohl unlösbar oder auch wieder lösbar gestaltet werden kann, so dass die Befestigungskomponente und die Gegenkomponente wieder zerstörungsfrei voneinander gelöst werden können. Im Falle eines Pumpenlaufrades als Befestigungskomponente ermöglicht dies z.B. den Tausch einer Gleitringdichtung der Pumpe, wofür das Laufrad abgenommen und wieder aufgesetzt werden muss.

Eine besonders vorteilhafte Anwendung der erfindungsgemäßen Befestigungskomponente findet sich bei einer Welle-Nabe Verbindung. So kann das Gehäuseteil in einer Ausführungsvariante eine Nabe und die Gegenkomponente eine Welle bilden. Bei einer solchen Verbindung umgibt die Nabe die Welle außenumfänglich, so dass der Hebel nach innen, insbesondere radial schwenken kann. Auf Metall-Inserts für die heute üblichen Pressverbindungen bei Welle-Nabe-Verbindungen kann dadurch verzichtet werden.

Vorzugsweise kann das Gehäuseteil Teil eines mechanischen oder hydraulischen Bauteils sein, idealerweise dessen Nabe bilden. Das Bauteil ist dann selbst die Befestigungskomponente. Zum Beispiel kann die Befestigungskomponente ein Laufrad einer Pumpe, eines Lüfters oder eines Kompressors sein. Da der erfindungsgemäße Verriegelungsmechanismus keine zusätzlichen Sicherungselemente erfordert, wie beispielsweise im Falle eines Laufrades eine Mutter ggf. mit Sicherungsstift, die auf das Ende der Welle geschraubt ist, somit im Strömungseinritt des Laufrades liegt und dort den Strömungsverlauf beeinträchtigt, verbessert die erfindungsgemäße Befestigungskomponente den Strömungsverlauf im Laufradeintritt. Bevorzugt kann das Gehäuseteil mit einem komplexen Pumpenlaufrad mit dreidimensional gekrümmter Beschaufelung kombiniert werden, für deren Herstellung sich aufgrund der hinterschneidungsbedingten Entformungsproblematik ein 3D-Druckverfahren ohnehin anbietet. Alternativ kann das Bauteil ein Rotor, ein Lager, eine Dichtung oder ein beliebiges anderes Bauteil sein, dass bestimmungsgemäß auf einer Welle zu befestigen ist.

Alternativ zur Integration des erfindungsgemäßen Verriegelungsmechanismusses in die Nabe, kann dieser Verriegelungsmechanismus, d.h. der Hebel auch Teil der Welle sein, d.h. in die Welle integriert sein. So kann gemäß einer Ausführungsvariante die Welle einer Welle-Nabe Verbindung die erfindungsgemäße Befestigungskomponente, genauer gesagt das Gehäuse mit wenigstens einer offenen Kammer bilden, in der der Hebel schwenkbar einliegt. In dieser Ausführungsvariante ist dann die Welle das additiv hergestellte Bauteil, wobei die Gegenkomponente die Befestigungskomponente außenumfänglich umgibt, so dass der Hebel nach außen, insbesondere radial schwenken kann.

Obgleich eine Welle-Nabe Verbindung ein bevorzugtes Anwendungsfeld für die Erfindung ist, ist diese nicht hierauf beschränkt. So können durch den erfindungsgemäßen Verriegelungsmechanismus zwei beliebige Komponenten lösbar oder unlösbar miteinander verbunden werden, die zur Verbindung bestimmungsgemäß axial zueinander gefügt werden. Als Beispiele sind hier zu nennen:
- die Befestigung eines Elektronikgehäuses, beispielsweise einer Pumpenelektronik (Klemmenkasten), an einem Elektromotor, insbesondere einem Pumpenmotor,
- die Befestigung eines Deckels oder Oberteils eines Elektronikgehäuses auf ein Unterteil des Elektronikgehäuses,
- die Befestigung einer Lüfterhaube an einem Lüftergehäuse,
- die bewegliche Verbindung eines Lüfters mit der Lüfterhaube zu einer Baugruppe,
- die Befestigung einer Leiterplatte (PCB) innerhalb eines Elektronikgehäuses, insbesondere innerhalb eines Klemmenkastens einer Pumpe
- die Befestigung eines Sensors
- die Befestigung eines Steckkontaktes (Stecker, Buchse) an einem Elektronikgehäuse

Von besonderem Vorteil ist es, wenn die Befestigungskomponente nicht nur einen einzigen Hebel, sondern mehrere Hebel aufweist, die jeweils in eine verriegelnde Position mit der Gegenkomponente schwenkbar sind. So kann der Formschluss mit der Gegenkomponente an mehreren Stellen erfolgen und für eine sichere Befestigung und/oder Kraftübertragung sorgen. Die Schwenkbewegung der Hebel kann gleichzeitig oder unabhängig voneinander erfolgen. In dem Gehäuse kann für jeden Hebel eine eigene Kammer vorhanden sein. Alternativ können alle Hebel in einer einzigen, durchgehenden Kammer einliegen.

In einer Ausführungsvariante können die Hebel ringförmig angeordnet sein. Eine solche Anordnung kann beispielsweise bei einer Welle-Nabe Verbindung vorgesehen werden. Bildet das Gehäuse die Nabe, so sind die Hebel dann entlang des Innenumfangs der Nabe angeordnet und nach innen zur innenliegenden Welle schwenkbar. Bildet das Gehäuse die Welle, so sind die Hebel entlang des Außenumfangs der Welle angeordnet und nach außen zur außenliegenden Welle schwenkbar.

In einer anderen Ausführungsvariante können die Hebel in einer linearen Reihe angeordnet sein. Eine solche Anordnung kann beispielsweise in einem Gehäuse wie z.B. einem Elektronikgehäuse vorgesehen werden, insbesondere in einem ebenen Wandabschnitt eines im Querschnitt rechteckigen Deckels oder Unterteils eines Gehäuses. Eine andere Verwendung einer solchen Anordnung ist beispielsweise die Fixierung eines PCB innerhalb einer Elektronik.

In einer Ausführungsvariante kann der Hebel oder können die Hebel um eine Achse tangential zur Fügerichtung schwenkbar gehalten sein. Die Längserstreckung eines Hebels und dessen Schwenkbewegung können dann vorzugsweise innerhalb einer Axialebene oder Sekantialebene zur Fügerichtung liegen.

In einer alternativen Ausführungsvariante kann der Hebel oder können die Hebel um eine Achse parallel zur Fügerichtung schwenkbar gehalten sein. Die Längserstreckung eines Hebels und dessen Schwenkbewegung können dann vorzugsweise innerhalb einer Radialebene zur Fügerichtung liegen.

In einer Ausführungsvariante kann der Hebel bzw. können die Hebel jeweils um einen Zapfen schwenkbar sein, der sich zwischen zwei Seitenwänden der Kammer erstreckt und einstückig mit dem Gehäuseteil ist. Der Hebel besitzt dann eine Öffnung, durch die sich der Zapfen hindurcherstreckt, so dass der Hebel auf dem Zapfen gelagert ist. In einer alternativen Ausführungsvariante kann der Hebel bzw. können die Hebel jeweils zwei sich gegenüberliegende Schwenkzapfen aufweisen, die in jeweils einer Ausnehmung gegenüberliegender Seitenwände der Kammer gelagert sind, und die einstückig mit dem Hebel sind.

In einer Ausführungsvariante kann der Hebel oder können die Hebel zweiseitig sein. So kann ein Hebel jeweils zwei winklig zueinander stehende Arme aufweisen, zwischen denen die Schwenkachse liegt, wobei ein freies Ende eines zweiten Arms vor dem Fügen aus der Kammer herausragt und der jeweilige Hebel durch das Fügen derart geschwenkt wird, dass das freie Ende des anderen bzw. ersten Arms in die Verriegelungsposition übergeht. Hierzu kann das freie Ende des ersten Arms aus der Kammer herausragen und in eine Ausnehmung der Gegenkomponente formschlüssig eingreifen, insbesondere einrasten.

Ein zweiseitiger Hebel mit winklig zueinander stehenden Armen ist als Knickhebel oder Winkelhebel bekannt. In der genannten Ausführungsvariante öffnet sich der Winkel zwischen den Armen zur Gegenkomponente hin, wobei in der einen Schwenkposition nur das freie Ende des einen Arms aus der Kammer herausragt und in der anderen Schwenkposition nur das freie Ende des anderen Arms aus der Kammer herausragt. In dieser anderen Schwenkposition kann die Verriegelung mit der Gegenkomponente erfolgen. Geeigneterweise ist der zweite Arm derjenige Arm, der in Fügerichtung hinten liegt, d.h. von der Gegenkomponente als Zweites erreicht wird.

Bevorzugt ist der oder sind die Hebel mit Spiel gelenkig gelagert, um den Hebel beim Fügen translatorisch zu versetzen. Das Spiel besteht in diesem Fall zwischen dem Hebel und dem Zapfen oder jeweils zwischen einem der Gelenkzapfen und der entsprechenden Ausnehmung in der Kammerwand. Die Gegenkomponente hebt den Hebel dann seitens des zweiten Arms unter Ausnutzung des Spiels leicht an, um die Bruchgefahr des Hebels zu minimieren, wobei gleichzeitig das freie Ende des ersten Arms auf die Gegenkomponente drückt.

Es ist von Vorteil, wenn das freie Ende des zweiten Arms einen Vorsprung mit einer bogenförmigen, insbesondere bauchigen Kontur aufweist. Dies bewirkt, dass jede Kante die auf diese Geometrie trifft, eine Kraftkomponente in Richtung Bauch/Radius-Mittelpunkt hat und damit den Hebel besser betätigt. Zudem liegt stets eine Linienberührung vor. Dies erleichtert das Fügen der Gegenkomponente relativ zur Befestigungskomponente, indem das Vorderende der Gegenkomponente an dem freien Ende des zweiten Arms leichter entlanggleitet, während der zweite Arm von der Gegenkomponente in die Kammer gedrängt wird.

Der zweite Arm kann auf seiner der Kammerrückwand zugewandten Rückseite eine Verdickung aufweisen, die einen Anschlag zur Kammerrückwand bildet. Diese einen Anschlag bildende Verdickung verhindert, dass der Hebel mit seinem verriegelnden freien Ende des ersten Arms im unverbundenen Zustand mit der Gegenkomponente zu weit aus der Kammer hervorsteht, beispielsweise aufgrund des Eigengewichts bzw. der Gravitationskraft. Ist dies der Fall, kann der Hebel brechen, wenn die Gegenkomponente beim Fügen gegen das freie Ende des ersten Arms des Hebels drückt.

Alternativ oder zusätzlich zu dem Anschlag, kann es zweckmäßig sein, den Hebel und die Kammer derart auszubilden, dass die Verdickung durch die Hebelbewegung in eine Nische der Kammer schwenkt, deren Innenwände seitliche Begrenzungen für die Verdickung bilden. Die Verdickung kann dann mit ihren Seitenwänden die Innenwände der Kammernische berühren. Dies dient der Führung des Hebels, dessen Spiel dadurch während des Verriegelns minimiert wird. Ein Verkippen des Hebels wird hierdurch verhindert.

In einer Ausführungsvariante kann der Hebel oder können die Hebel einseitig sein. So kann ein Hebel nur einen ersten Arm aufweisen, an dessen einem Ende die Schwenkachse liegt und dessen freies anderes Ende aus der Kammer heraus bewegbar ist, um von einer unverriegelnden Position in die Verriegelungsposition überzugehen, um mit dem freiem Ende in eine Ausnehmung der Gegenkomponente einzugreifen. Eine solche Ausführung des bzw. der Hebel ermöglicht die Realisierung einer lösbaren Verbindung.

Um einen wirkungsvollen Formschluss zu erreichen, kann das freie Ende des ersten Arms sowohl in der Variante mit zweiseitigem Hebel, als auch in der Variante mit einseitigem Hebel einen riegelartigen Vorsprung aufweisen, um in einer Ausnehmung in der Gegenkomponente einzugreifen.

Vorzugsweise steht der oder stehen die Hebel mit einem Schieber in Wirkverbindung, um den bzw. die Hebel von der unverriegelnden Position in die Verriegelungsposition oder von der Verriegelungsposition in die unverriegelnde Position zu schwenken. Der Schieber kann drehbeweglich oder linearbeweglich sein, je nach Form der Befestigungskomponente. Einen besonderen Vorteil entfaltet der Schieber, wenn zwei oder mehr Hebel mit ihm in Wirkverbindung stehen. In diesem Fall kann der Schieber diese Hebel gleichzeitig betätigen, d.h. von der unverriegelnden Position in die Verriegelungsposition oder von der Verriegelungsposition in die unverriegelnde Position schwenken.

In einer Ausführungsvariante kann der Schieber einen länglichen Gleitschuh mit einer zum Hebel gerichteten Ausnehmung in Form eines Langlochs aufweisen, in der ein Gleitzapfen des Hebels einliegt, der am freien Endes des Arms angeordnet ist, wobei die Längsachse der Ausnehmung winklig, insbesondere tangential zur Bewegungsrichtung des Schiebers liegt. Durch die Verschiebung des Gleitschuhs in Bewegungsrichtung des Schiebers wandert der Gleitzapfen in dem Langloch von einem Ende zum anderen Ende, wobei er, respektive das freie Ende des Arms, gleichzeitig quer zur Bewegungsrichtung des Schiebers versetzt wird, was in der Schwenkbewegung des Hebels resultiert.

In einer Ausführungsvariante kann der Schieber einen Steg aufweisen, an dessen Ende der Gleitschuh ausgebildet ist. Der Steg ermöglich einen Abstand zum Gleitschuh zu überbrücken. So kann der Gleitschuh tiefer in der Befestigungskomponente, insbesondere auf einer ersten axialen Höhe liegen, wohingegen die Betätigung des Schiebers höher, insbesondere auf einer zweiten axialen Höhe erfolgt.

Vorzugsweise kann der Schieber einen Kopf aufweisen, mit dem das dem Gleitschuh gegenüberliegende Endes des Steges befestigt ist. Im Falle mehrerer Hebel sind geeigneterweise die Stege aller diese Hebel verschwenkenden Gleitschuhe mit dem Kopf verbunden. Der Kopf ist vorzugsweise derart ausgebildet, dass er werkzeugfrei, z.B. mit der Hand bewegt werden kann. Hierzu kann der Kopf eine geeignete Außenkontur aufweisen.

In einer Ausführungsvariante, in der die Hebel entlang eines Umfangs angeordnet sind, kann der Kopf ringförmig sein, so dass der Schieber einen Drehschieber bildet und gedreht wird, um die Hebel zu schwenken. Idealerweise besitzt er zumindest abschnittsweise eine konische Außenkontur, um ihn mit der Hand drehen zu können.

In der Gesamtheit kann der Schieber folglich den oder die Gleitschuhe, den oder die Stege und den Kopf umfassen, wobei diese Elemente durch die additive Herstellung einstückig und direkt in die Befestigungskomponente integriert hergestellt werden.

Um die Position des Hebels oder der Hebel sicherzustellen und ein Auflösen des Formschlusses zu verhindern, kann der Schieber mittels zumindest einem Blockierelement arretiert werden. Dieses Blockierelement kann direkt mit additiv gefertigt d.h. mitgedruckt werden. Es kann alternativ separat zum Schieber hergestellt und nach der formschlüssigen Verbindung der Befestigungskomponente mit der Gegenkomponente in den Schieber eingesetzt werden, um diesen zu arretieren. Dabei kann das Blockierelement einen Formschluss mit der Befestigungskomponente eingehen.

Die additive Herstellung der erfindungsgemäßen Befestigungskomponente mit integriertem Hebel oder integrierten Hebeln und gegebenenfalls mit integriertem Schieber kann durch ein an sich bekanntes Verfahren erfolgen. Beispielsweise kann die Befestigungskomponente aus Kunststoff oder Metall bestehen. Sie kann aus einem pulverbasierten oder polymeren Kunststoffmaterial hergestellt sein. Als Kunststoffe kommen beispielsweise in Frage:
PP (Polypropylen), PPE (Polyphenylenether), PEK (Polyetherketon), PEEK (Polyetheretherketon), PEKK (Polyetherketonketon), PAEK (Polyaryletherketone) oder PPS (Polyphenylensulfid).

Um eine hohe Präzision zu erreichen ist jedoch die Herstellung der Befestigungskomponente aus einem Pulverbett mittels selektivem Lasersintern (SLS) eines Kunststoffpulvers oder mittels selektivem Laserschmelzen (SLM) eines Metallpulvers von Vorteil. Das Gehäuseteil und der oder die Hebel, gegebenenfalls auch der Schieber werden dann gleichzeitig aus einzelnen, nacheinander aufgetragenen Pulverschichten hergestellt, indem ein Laser das Pulver partiell dort aufschmilzt, wo das Bauteil im Pulver "wachsen" soll.

Um unverfestigtes Pulver aus den Spalten zwischen den relativ zueinander bewegten Teilen der Befestigungskomponente zu entfernen, kann zumindest ein Kanal im Gehäuseteil vorgesehen werden, der einerends zur Außenseite des Gehäuses hin offen ist, und der sich anderenends zur Schwenklagerung eines der Hebel hin öffnet, beispielsweise zum Zapfen bzw. Gelenkzapfen.

Die vorstehend beschriebene Befestigungskomponente bildet mitsamt der Gegenkomponente, mit der die Befestigungskomponente durch axiales Fügen formschlüssig verbunden ist, eine Baugruppe, die ebenfalls Gegenstand der Erfindung ist.

Weitere Merkmale, Vorteile und Eigenschaften des erfindungsgemäßen Verfahrens sowie der Pumpenanordnung, in der das Verfahren implementiert ist, werden nachfolgend anhand von Ausführungsbeispielen und der beigefügten Figuren erläutert.

Es sei darauf hingewiesen, dass im Rahmen der vorliegenden Beschreibung die Begriffe "aufweisen", "umfassen" oder "beinhalten" keinesfalls das Vorhandensein weiterer Merkmale ausschließen. Ferner schließt die Verwendung des unbestimmten Artikels bei einem Gegenstand nicht dessen Plural aus.

Die Bezugszeichen behalten von einer zur anderen Figur ihre Bedeutung. Identische Bezugszeichen bezeichnen identische oder zumindest wirkungsgleiche Elemente. Es zeigen:
- Fig. 1:: eine erste Ausführungsvariante einer erfindungsgemäßen Befestigungskomponente in Draufsicht ohne Gegenkomponente.
- Fig. 2:: eine teilgeschnittene perspektivische Ansicht der Befestigungskomponente nach Fig. 1 mit teilweise axial gefügter, ungeschnittener Gegenkomponente
- Fig. 3:: eine teilgeschnittene, perspektivische Ansicht der Befestigungskomponente nach Fig. 1 mit ungeschnittener Gegenkomponente in axialer Endposition
- Fig. 4:: eine vergrößerte Darstellung eines Hebels in der Befestigungskomponente nach einer zweiten Ausführungsvariante im axialen Schnitt
- Fig. 5:: eine perspektivische Darstellung eines Pumpenlaufrades als Befestigungskomponente
- Fig. 6:: eine dritte Ausführungsvariante einer erfindungsgemäßen Befestigungskomponente in Gestalt eines Pumpenlaufrads in der Art einer Explosionszeichnung
- Fig. 7:: einen perspektivischen Axialschnitt durch die Befestigungskomponente nach Fig. 6 samt Gegenkomponente
- Fig. 8:: eine vergrößerte Ansicht des perspektivischen Axialschnitts durch die Befestigungskomponente nach Fig. 6 ohne Gegenkomponente
- Fig. 9:: einen Radialschnitt durch die Befestigungskomponente auf Höhe der Gleitschuhe im Verriegelungszustand
- Fig. 10:: einen Radialschnitt durch die Befestigungskomponente auf Höhe der Gleitschuhe im nicht verriegelnden Zustand
- Fig. 11:: einen Schnitt durch die Schwenkachse eines Hebels der Befestigungskomponente

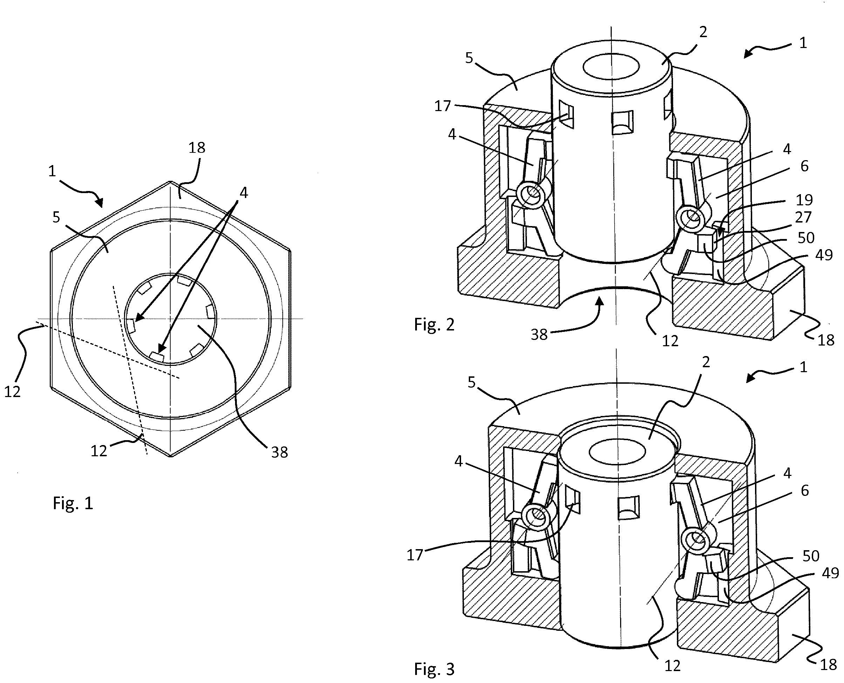

Die Figuren 1 bis 3 zeigen eine Befestigungskomponente 1 in Form einer Nabe zur formschlüssigen Verbindung mit einer Gegenkomponente 2 in Form einer Welle durch axiales Fügen. Die Befestigungskomponente 1 besteht aus einem ringförmigen Gehäuseteil 5 mit einem Aufnahmeraum 38 zur Aufnahme der Gegenkomponente 2 respektive der Welle und besitzt an einem Axialende eine Erweiterung 18, deren Außenkontur im Querschnitt einen Sechskant bildet. Ferner weist das Gehäuseteil 5 mehrere Kammern, hier beispielhaft sechs Kammern 6, die über den Umfang verteilt und zum Aufnahmeraum 38 offen sind. In jeder Kammer 6 liegt ein zweiseitiger Hebel 4 ein, der in eine Verriegelungsposition mit der Welle 2 schwenkbar ist, indem die Hebel 4 jeweils um eine tangential zum Aufnahmeraum 38 verlaufende Schwenkachse 12 schwenken. Die Befestigungskomponente 1 ist einschließlich der integrierten Hebel 4 additiv hergestellt, d.h. Schicht für Schicht 3D gedruckt.

Figur 1 zeigt die Befestigungskomponente 1 ohne Gegenkomponente 2, wobei sich die Hebel 4 in einer fügefähigen Ausgangsposition befinden. In dieser Position ragen die Hebel 4 mit einem Ende 10 aus der jeweiligen Kammer 6 heraus und in den Aufnahmeraum 38 hinein. Sie werden durch das Einfügen der Gegenkomponente 2 in den Aufnahmeraum 38 verdrängt, indem sie um die Schwenkachse 12 schwenken. Dabei gelangt das anderen Ende 9 in Eingriff mit entsprechenden Ausnehmungen 17, vergleiche Figur 2. Diese Ausnehmungen 17 sind hier beispielhaft in Gestalt fensterartiger Vertiefungen in der Welle 2 ausgebildet, sodass die Hebel 4 eine rotatorische und translatorische, d. h. axiale Verriegelung mit der Gegenkomponente 2 bewirken. Figur 2 zeigt die Befestigungskomponente 1 mit in dem Aufnahmeraum 38 einliegender Gegenkomponente 2 in noch nicht verriegelter Position. Die Gegenkomponente 2 ist hierbei noch nicht so weit in die Befestigungskomponente 1 hineingeschoben, dass die Ausnehmungen 17 auf der Höhe der Hebelenden 9 liegen, die bestimmungsgemäß in die Ausnehmungen 17 eingreifen. Figur 3 zeigt dagegen die Hebel 4 in ihrer Verriegelungsposition, in der die Hebel 4 mit ihren Enden 9 formschlüssig in den Ausnehmungen 17 der Welle 2 einliegen.

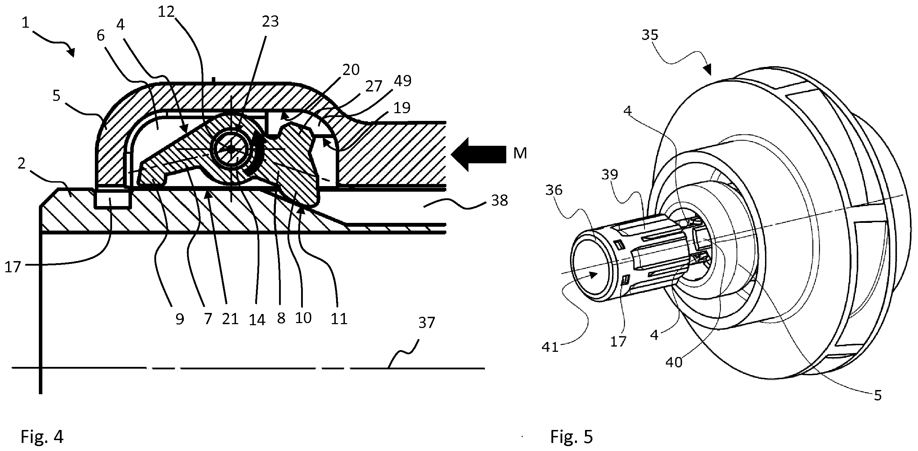

Figur 4 zeigt eine Querschnittsdarstellung durch einen Hebel 4 gemäß einer zweiten Ausführungsvariante, die allerdings funktionsgleich zu der ersten Ausführungsvariante ist und lediglich eine andere Hebelform zeigt. Das Funktionsprinzip eines erfindungsgemäßen Hebels soll anhand von Figur 4 genauer erläutert werden. Ein dicker Pfeil gibt die Fügerichtung M der Befestigungskomponente 1 relativ zur Gegenkomponente 2 an, welche entlang einer Achse 37 verläuft. Bezogen auf diese Achse 37 zeigt Figur 4 einen axialen Querschnitt ist. Die Befestigungskomponente 1 bildet auch hier wieder eine Nabe und die Gegenkomponente 2 eine Welle, wobei die Achse 37 der Wellenachse entspricht.

Der Hebel 4 liegt in einer Kammer 6 des Gehäuses 5 der Befestigungskomponente 1 ein, wobei die Kammer 6 eine Öffnung 21 zur Gegenkomponente 2 aufweist. Der Hebel 4 ist ein zweiseitiger Hebel mit einem ersten Arm 7 und einem zweiten Arm 8, die winklig zueinander stehen, so dass der Hebel ein sogenannter Knickhebel oder Winkelhebel ist. Die Arme 7, 8 bilden somit die Schenkel des Winkels, der sich zur Gegenkomponente 2 hin öffnet, wie die beiden gestrichelten Geraden in Figur 4 andeuten, die die Haupterstreckungsrichtungen der beiden Arme 7, 8 andeuten. Der Scheitel der von den beiden Armen 7, 8 gebildete Winkel liegt in etwa auf der Schwenkachse 12. Der Hebel 4 ist schwenkbar um einen Zapfen 14 gelagert, der einstückig mit dem Gehäuse 5 ist und sich zwischen zwei in Umfangsrichtung gegenüberliegenden Seitenwänden der Kammer 6 erstreckt. Die Schwenkachse 12 bildet die Mittelachse dieses Zapfens 14. Die beiden Arme 7, 8 gehen in einen gemeinsamen Ring über, der den Zapfen 14 mit Spiel 23 umgibt. Die Schwenkachse 12 liegt in der Darstellung gemäß Figur 4 quer zur Fügerichtung M, wobei sie jedoch gemäß Figur 1 tangential hierzu verläuft. Die Längserstreckung des Hebels 4 sowie seine Schwenkbewegung liegen in einer Axialebene, die hier die Achse 37 einschließt.

Figur 4 stellt den Hebel 4 in der nicht verriegelnden Position dar. In dieser ragt das freie Ende 10 des zweiten Armes 8, welches einen Vorsprung zur Gegenkomponente 2, hier in radialer Richtung aufweist, durch die Kammeröffnung 21 aus der Kammer 6 hervor und liegt somit in der Flucht der Gegenkomponente 2. Diese ist in Figur 4 so weit in den Aufnahmeraum 38 eingeschoben dargestellt, dass ihr axiales Ende gegen das freie Ende 10 des zweiten Arms 8 respektive gegen dessen Vorsprung stößt, während das freie Ende 9 des ersten Armes 9 vollständig in der Kammer 6 liegt. Durch fortschreitendes axialen Fügen der Befestigungskomponente in Richtung M der Gegenkomponente 2 wird das freie Ende 10 des zweiten Arms 8 aus der Flucht der Gegenkomponente 2 verdrängt und radial in die Kammer 6 hineingedrückt. Dabei schwenkt der Hebel 4 um den Zapfen 14 bzw. um die Achse 12, bis das freie Ende 9 des ersten Armes 7 außen an der Welle 2 anliegt. Das freie Ende 10 des zweiten Arms 8 weist eine bogenförmige Außenkontur 11 auf, entlang welcher das Axialende der Gegenkomponente 2 bei fortschreitendem Fügen entlanggleitet.

In dem in Figur 4 dargestellten Ausführungsbeispiel ist der Weg, den das freie Ende 10 des zweiten Arms 8 zurückschwenken muss, um aus der Flucht der Gegenkomponente 2 herauszutreten geringer, als der radiale Abstand des freien Endes 9 des ersten Armes 7 zur Gegenkomponente 2. Der Hebel 4 wir deshalb in Folge des weiteren Fügens um das Spiel 23 zum Zapfen 14 angehoben und somit geringfügig translatorisch in Bezug zur Gegenkomponente 2 versetzt. Durch die Schwenkbewegung einerseits und die translatorische Bewegung andererseits stößt eine dem Vorsprung gegenüberliegende Verdickung 27 am zweiten Arm 8, die der der Kammeröffnung 21 gegenüberliegenden Kammerrückwand 20 zugewandt ist, gegen diese Kammerrückwand 20 und bildet somit einen Anschlag. Die Verdickung 27 verhindert, dass das freie Ende 9 des ersten Armes 7 bei fehlender Gegenkomponente 2 zu weit radial in den Aufnahmeraum 38 ragt, z.B. bedingt durch die Schwerkraft. Dadurch ließe sich die Gegenkomponente 2 nicht einschieben oder der Hebel 4 könnte beschädigt werden.

In der Ausführungsvariante gemäß der Figuren 2 und 3 liegt die Verdickung 27 näher an der Schwenkachse 12 der Hebel 4. Der Hebel 4 und die Kammer 6 sind derart ausgebildet, dass die Verdickung 27 durch die Hebelbewegung in eine Nische 19 der Kammer 6 schwenkt oder tiefer in diese Kammernische 19 hineinschwenkt, deren Innenwände 49 seitliche Begrenzungen für die Verdickung 27 bilden. Die Verdickung 27 berührt mit ihren Seitenwänden 50 die Innenwände 49 der Kammernische 19 und wird dadurch geführt, so dass das Spiel des Hebels beim Verriegeln minimal ist und dieser nicht Verkippen kann. Um das Hineinschwenken zu vereinfachen, sind die Seitenwände 50 der Verdickung 27 abgeflacht, wohingegen die Innenwände 49 der Kammernische 19 korrespondierend abgeflacht sind. Im Querschnitt quer zur Längserstreckung des Hebels 4 betrachtet, ist die Verdickung trapezförmig.

Der Hebel 4 wird durch das fortschreitende Einschieben der Gegenkomponente 2 in den Aufnahmeraum 38 geringfügig gespreizt, sodass das freie Ende 9 des ersten Arms 7, welches einen zur Gegenkomponenten 2 gerichteten, riegelartigen Vorsprung aufweist, stärker gegen die Gegenkomponente 2 drückt und unverzüglich in der entsprechenden Ausnehmung 17 der Gegenkomponente 2 formschlüssig einrastet, sobald sich diese auf Höhe des freien Endes 9 des ersten Arms 7 befindet.

Figur 5 zeigt eine beispielhafte Verwendung des erfindungsgemäßen Verriegelungsmechanismusses bei einem Pumpenlaufrad 35, in welches er integriert ist. Somit wird die Befestigungskomponente 1 hier durch das Laufrad 35 selbst gebildet, wobei das Gehäuse 5 die Nabe des Laufrads 35 ist. Das Pumpenlaufrad 35 ist vollständig durch ein additives Verfahren hergestellt worden.

In dieser Ausführungsvariante ist die Gegenkomponente 2 nicht durch eine Pumpenwelle, sondern durch einen hülsenförmigen Wellenadapter 36 gebildet, der innen einen Aufnahmeraum 41 eine Pumpenwelle bildet, und am Außenumfang die Ausnehmungen 17 zur formschlüssigen Aufnahme der Hebel 4 aufweist. Zur Drehmomentübertragung ist zwischen dem Wellenadapter 36 und dem Laufrad 35 allerdings ein weiterer Formschluss vorgesehen, der hier in Gestalt von Längsvertiefungen 39 im Wellenadapter 36 und korrespondierenden Längsrippen 40 gebildet ist, die am Innenumfang der Nabe bzw. des Gehäuses 5 zwischen zwei in Umfangsrichtung benachbarten Hebeln 4 vorspringen. Durch den Formschluss zwischen den Längsvertiefungen 39 und den Längsrippen 40 werden tangentiale Kräfte in beide Rotationsrichtungen übertragen.

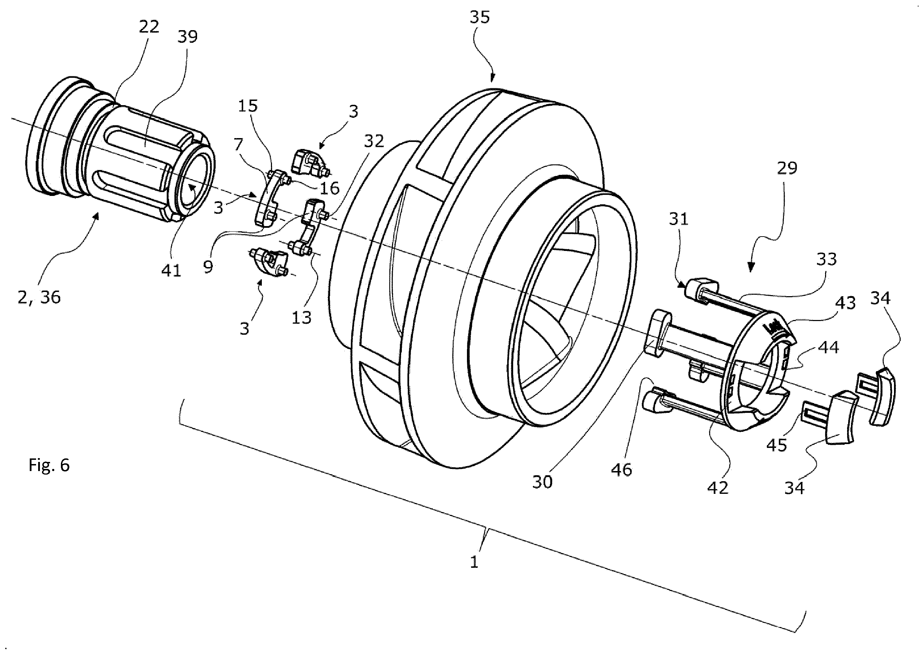

Die in den Figuren 1 bis 5 gezeigten Ausführungsvarianten realisieren eine unlösbare Verbindung zwischen der Befestigungskomponente 1 und der Gegenkomponente 2. Ferner wird der erfindungsgemäße Verriegelungsmechanismus automatisch betätigt durch das axiale Fügen der beiden Komponenten zueinander. Die Figuren 6 bis 11 zeigen demgegenüber eine weitere Ausführungsvariante, bei der der Verriegelungsmechanismus einerseits manuell betätigt werden muss, andererseits auch wieder lösbar ist.

Die Befestigungskomponente 1 ist in dieser weiteren Ausführungsvariante gemäß Figuren 6 bis 11 ebenfalls ein Pumpenlaufrad 35, wobei die Nabe dieses Pumpenlaufrads 35 das Gehäuse 5 bildet. Die Gegenkomponente 2 ist wieder durch den Wellenadapter 36 gebildet, dessen Aufnahmeraum 41 zur Aufnahme einer Pumpenwelle vorgesehen ist. Der wesentliche Unterschied zu den Ausführungsvarianten in den Figuren 1 bis 5 besteht darin, dass die Längserstreckung der Hebel 3, die hier einseitig sind, sowie deren Schwenkbewegung, in einer Radialebene zur Fügerichtung M liegt. Des Weiteren wird die Verriegelung der Hebel mit der Gegenkomponente nicht durch das axiale Fügen selbst bewirkt. Vielmehr kann die Schwenkposition der Hebel 3 durch Drehbetätigung eines Schiebers 29, nachfolgend Drehschieber genannt, manuell vorgegeben werden.

Figur 6 zeigt die verschiedenen zusammenwirkenden Elemente bei einer erfindungsgemäßen formschlüssigen Verbindung der additiv hergestellten Befestigungskomponente 1 mit der Gegenkomponente 2 gemäß der weiteren Ausführungsvariante in der Art einer Explosionsdarstellung. Diese Elemente umfassen die Gegenkomponente 2 einerseits, die hier erneut durch den Wellenadapter 36 gebildet ist, die Befestigungskomponente 1 andererseits, die hier wieder ein Pumpenlaufrad 35 bildet, sowie zwei Blockierelemente 34. In das Laufrad 35 sind vier Hebel 3 sowie der Schieber 29 integriert. Entgegen der Explosionsdarstellung in Figur 6 müssen die Hebel 3 und der Schieber 29 nicht in das Laufrad 35 eingebaut werden. Durch die additive Herstellung der Befestigungskomponente 1 wird das Pumpenlaufrad 35 direkt mit integrierten Hebeln 3 und integriertem Drehschieber 29 gedruckt. Die Blockierelemente 34 werden separat zur Befestigungskomponente 1 hergestellt und nach der Montage der Befestigungskomponente 1 auf der Gegenkomponente 2 in den Schieber 29 eingesteckt, um diesen zu verriegeln, d. h. eine rotatorische Bewegung des Schiebers 29 relativ zum Laufrad 35 zu verhindern.

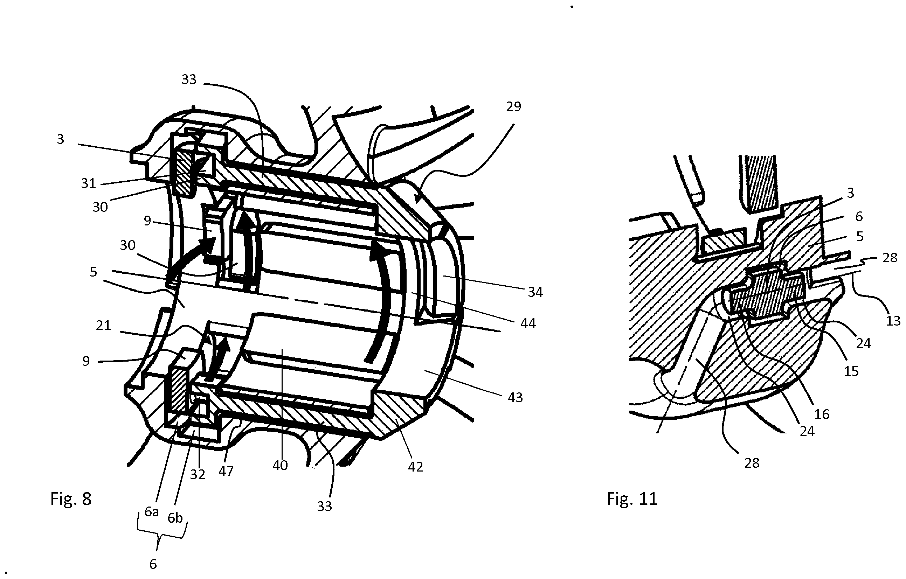

Wie bereits angemerkt, sind die Hebel 3 in dieser Ausführungsvariante einseitig, besitzen folglich nur einen ersten Arm 7, der hier bogenförmig ist. Die Hebel 4 sind identisch, so dass die Beschreibung eines Hebels exemplarisch für alle Hebel steht. An einem Ende des Arms ist der Hebel 3 um eine Schwenkachse 13 schwenkbar gehalten. Zu diesem Zweck weist der Hebel 3 an diesem Ende an gegenüberliegenden Seiten jeweils einen ersten Schwenkzapfen 15 und einen zweiten Schwenkzapfen 16 auf, die einstückig mit dem Arm 7 sind und in jeweils einer Ausnehmung 24 im Gehäuse 5 einliegen, siehe Figur 11. Die Schwenkachse 13 liegt parallel zur Fügerichtung M.

Das andere, freie und folglich schwenkbare Ende 9 des Arms 7 weist einen zur Gegenkomponente 2 respektive zum Wellenadapter 36 gerichteten Vorsprung auf, der bestimmungsgemäß in eine Ausnehmung 22 der Gegenkomponente 2 geschwenkt werden kann. Die Ausnehmung 22 ist hier in Gestalt einer Ringnut ausgebildet, so dass axiale Kräfte in beide Richtungen übertragen werden können. Um einen Formschluss in Umfangsrichtung zu erreichen und damit die Drehmomentübertragung zu gewährleisten, weist die Gegenkomponente analog zu Figur 5 Längsvertiefungen 39 auf, in die entsprechende Längsrippen 40 des Laufrades 35 formschlüssig eingreifen, siehe Fig. 8.

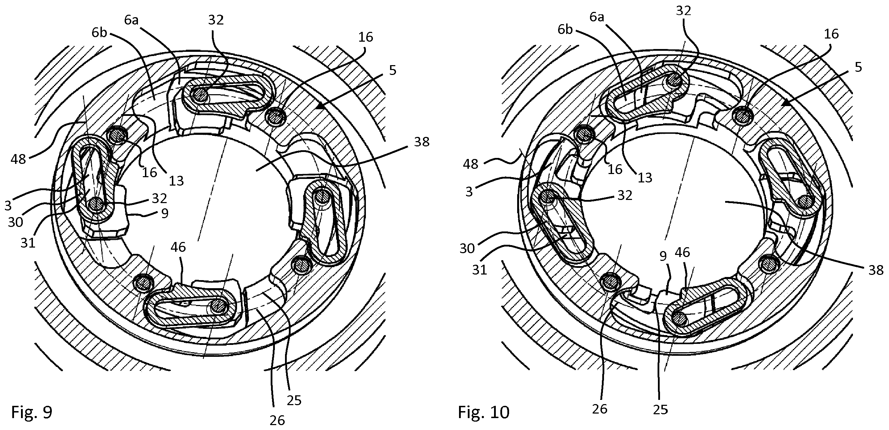

Jeder Hebel 3 weist an seinem freien Ende 9 einen Gleitzapfen 32 auf, der sich parallel zur Schwenkachse 13 erstreckt und zum Drehschieber 29 gerichtet ist. Der Gleitzapfen 32 liegt in einer Ausnehmung 31 eines Gleitschuhs 30 des Drehschiebers 29 ein, die im Querschnitt betrachtet ein Langloch bildet, vergleiche Figuren 9 und 10. Die Gleitschuhe 30 sind über jeweils einen Steg 33 mit einem ringförmigen Kopf 42 des Schiebers 29 verbunden, sodass eine Drehung dieses Kopfes 42 alle Gleitschuhe 30 bewegt und damit alle Hebel 3 gleichzeitig schwenkt.

Der Kopf 42 weist zwei sich gegenüberliegende Ringsegmente 43 mit konischer Außenkontur auf, die beidseitig durch jeweils einen flachen Zwischenabschnitt 44 miteinander verbunden sind. Der Kopf 42 wird somit durch die beiden Ringsegmente 43 und die beiden Zwischensegmente 44 gebildet. Die konische Außenkontur verhindert eine Beeinträchtigung der Strömung im Laufradeintritt, in welchem der Kopf 42 des Drehschiebers 29 liegt. Die Blockierelemente 34 sind im Verriegelungszustand der Heben 3 auf die flachen Zwischensegmente 44 zwischen die Ringsegmente 43 einsetzbar. Die Blockierelemente 34 bilden ebenfalls Ringsegmente mit konischer Außenkontur korrespondierend und fluchtend mit der Außenkontur der Ringsegmente 43, sodass der Kopf 42 im verriegelten Zustand eine insgesamt kegelstumpfförmige Außenkontur besitzt. Die Blockierelemente 34 weisen sich zu den Gleitschuhen 30 erstreckende Blockierzungen 45 auf, die im Verriegelungszustand der Hebel 3 einen Formschluss mit dem Laufrad 35 derart bilden, dass der Drehschieber 29 nicht aus der Verriegelungsposition zurückgedreht werden kann. Wie in Figur 6 erkennbar ist, trägt der Kopf 42 einen Schriftzug "LOCK" in Verbindung mit einem Pfeil, um die Verriegelungsrichtung anzudeuten. Alternativ kann der Schriftzug "UNLOCK", "OPEN" oder "CLOSE", "TURN TO UNLOCK" etc. sein.

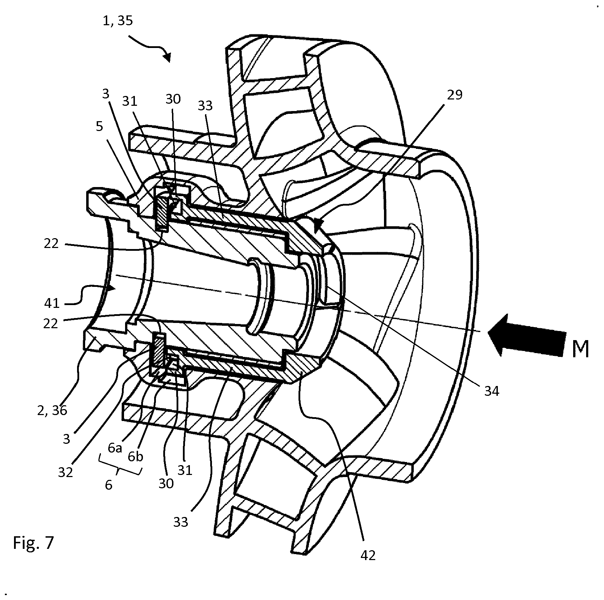

Das Funktionsprinzip des Verriegelungsmechanismusses in Fig. 6 wird anhand der Figuren 7 bis 11 deutlich.

Figur 7 zeigt die Befestigungskomponente 1 respektive das Laufrad 35 im mit der Gegenkomponente 2, respektive dem Wellenadapter 36 zusammengefügten Zustand im axialen Schnitt. Die Hebel 3 sind aus der Kammer 6 im Gehäuse 5, das die Nabe des Laufrads 35 bildet, herausgeschwenkt und liegen dabei mit den Vorsprüngen am freien Ende 9 in der Ringnut 22 des Wellenadapters 36 ein. Bei dem unteren geschnittenen Hebel 3 ist der Gleitzapfen 32 erkennbar, der in der Ausnehmung 31 des entsprechenden Gleitschuhs 30 aufgenommen einliegt.

In axialer Richtung betrachtet, ist die Kammer 6 in einen ersten und einen zweiten Kammerbereich 6a, 6b aufgeteilt, die nebeneinander liegen und ineinander übergehen. In dem ersten Kammerbereich 6a ist jeweils einer der Hebel 3 schwenkbar angeordnet, und in dem zweiten Kammerbereich 6b liegt jeweils einer der Gleitschuhe 30 verschiebbar ein. Wie Figuren 8 und 9 zu erkennen geben, sind die Längserstreckungen der Kammerbereiche 6a und 6b in Umfangsrichtung zueinander versetzt, um einerseits die Bewegungen der jeweiligen Teile, d.h. Hebel 3 und Gleitschuh 30 zu ermöglichen, andererseits aber nur einen minimalen Abstand zwischen den bewegbaren Elementen und den Kammerwänden zu haben.

Die Gleitschuhe 30 sind jeweils an einem axialen Ende eines Stegs 33 ausgebildet, dessen anderes axiales Ende in den Kopf 42 übergeht. Die Gleitschuhe 30, die Stege 33 und der Kopf 42 sind einstückig ausgebildet und bilden den Drehschieber 29. Die Stege 33 liegen in jeweils einem länglichen Hohlraum 47 des Laufrads 35, genauer gesagt seiner Laufradnabe bzw. des Gehäuses 5, siehe Figur 8.

Figur 8 zeigt eine vergrößerte Darstellung des Gehäuses 5 bzw. der Nabe bei entferntem Wellenadapter 36, wobei sich die Hebel 3 analog zur Figur 7 in ihrer Verriegelungsposition befinden. Die Pfeile geben die Bewegungsrichtungen an, um die Verriegelungsposition zu verlassen, wobei hierzu zunächst die in den Kopf 42 eingesetzten Blockierelemente 34 zu entfernen sind. Ist dies erfolgt, kann der Drehschieber 29 entgegen dem Uhrzeigersinn gedreht werden, so dass sich die Gleitschuhe 30 innerhalb des zweiten Kammerbereichs 6b ebenfalls entgegen dem Uhrzeigersinn bewegen. Eine Bewegung um wenige Grad, beispielsweise 10°-20° genügt hierbei.

Wie anhand von Fig. 9 deutlich wird, ist die Längsachse 48 der Ausnehmung 31 in den Gleitschuhen 30 derart tangential zur Drehbewegung des Drehschiebers 29 bzw. zum Innenumfang der Nabe angeordnet, dass ein Ende der langlochförmigen Ausnehmung 31 radial weiter innen liegt und bei der Bewegung einen Abschnitt eines Innenkreises 25 beschreibt, und das andere Ende der langlochförmigen Ausnehmung 31 radial außen liegt und bei der Bewegung einen Abschnitt eines Außenkreises 26 beschreibt, der einen größeren Radius als der Innenkreis 25 besitzt. Wird ein Gleitschuh 20 entgegen dem Uhrzeigersinn geschoben, wandert der Gleitzapfen 32 von dem radial innen liegenden Ende des Langlochs 31 zum anderen, radial außen liegenden Ende des Langlochs 31, wobei er sich von dem Innenkreis 25 zum Außenkreis 26 bewegt und der Hebel 3, genauer gesagt das freie Ende 9 seines Arms 7 aus der Verriegelungsposition radial zurück in die nicht verriegelnde Position schwenkt. Dieser Zustand ist in Fig. 10 dargestellt. In der nicht verriegelnden Position sind die Hebel 3 aus der Ringnut 22 zurückgefahren und liegen somit nicht mehr in der Flucht des Wellenadapters 36, so dass das Laufrad 35 von diesem abgenommen werden kann. Somit ermöglicht der Drehschieber 29 die Hebel 3 von einer verriegelnden Position, in der sie einen Formschluss mit der Gegenkomponente 2 eingehen, in eine nicht verriegelnde Position zu bringen und damit die formschlüssige Verbindung zu lösen. Dies erfolgt selbstverständlich in gleicher Weise umgekehrt, wobei der Drehschieber 29 durch Drehung in die andere Richtung die Hebel 3 von der nicht verriegelnden Position in die Verriegelungsposition bringt, um die formschlüssige Verbindung zur Gegenkomponente herzustellen.

Das Pumpenlaufrad 35 ist mitsamt der Hebel 3 und dem Drehschieber 29 als integrale Baueinheit in einem einzigen Herstellungsschritt additiv hergestellt. Die erfolgt hier im sogenannten Pulverbettverfahren durch selektives Lasersintern (SLS) eines Kunststoffpulvers oder selektives Laserschmelzen (SLM) eines Metallpulvers, bei dem nacheinander einzelne Pulverschichten aufgetragen und durch einen Laser partiell dort aufgeschmolzen werden, wo die erfindungsgemäße Befestigungskomponente ausgebildet werden bzw. schichtweise wachsen soll. Als Kunststoff kann beispielsweise PPS (Polyphenylensulfid), PEEK (Polyetheretherketonketon), PAEK (Polyaryletherketone) oder PEKK (Polyetherketonketon) verwendet werden.

Um die Beweglichkeit zwischen den bewegten Bauteilen, d.h. zwischen Gehäuse 5 und Hebel 3, 4 bzw. zwischen Gehäuse 5 und Drehschieber 29 zu gewährleisten, werden dort Spalte vorgesehen, die eine Breite zwischen 0,1mm und 0,4mm haben, weshalb das Pulverbettverfahren besonders anbietet, da die erforderliche Genauigkeit durch ein schichtweises Ablegen eines aufgeschmolzenen Kunststoff-Filaments derzeit noch nicht erreicht werden kann.

Zur Entfernung unverfestigten Pulvers aus den Schwenklagerungen der Hebel 3 wird in dem Gehäuse 5 jeweils wenigstens ein Kanal 28 vorgesehen, siehe Fig. 11, der sich einerends nach außen öffnet, anderenends in die Aufnahme 24 für einen Gleitzapfen 15, 16 mündet. Dies ermöglicht die restlose Entfernung des Pulvers aus dem Gelenkbereich zwischen Gehäuse 5 und Aufnahme 24.

Nachfolgend seien die Vorteile der Erfindung noch einmal zusammengefasst:
- Die Bewegung des Hebels kann durch die Montage der Befestigungskomponente an der Gegenkomponente geschehen oder durch eine Verstell-Mechanik in der Befestigungskomponente.
- das Pumpenlaufrad kann leicht manuell und ohne hydraulisches Presswerkzeug auf der Pumpenwelle montiert werden, insbesondere auch wieder demontiert werden.
- der Verriegelungsmechanismus kann lösbar oder unlösbar sein.
- zusätzlichen Befestigungselemente wie Inserts, Muttern, Passstifte, Passfedern, Schrauben, Sicherungsringen werden nicht benötigt.
- es sind keine zusätzlichen Montageschritte (Schraubermontage-Vorgänge) und kein zusätzliches Werkzeug erforderlich, was Zeit und Kosten spart.
- die Wartung bzw. der Pumpenservice z.B. im Falle eines Austauschs oder einer Überprüfung der Gleitringdichtung wird vereinfacht.
- die additive Herstellung (3D-Druck) ermöglicht einen effizienteren Materialeinsatz.
- die additive Herstellung kann ein pulverbasierter, ein polymerer oder ein metallischer 3D-Druck sein und ist deshalb bei einer Vielzahl an druckbaren Materialen einsetzbar.
- es gibt vielseitige Nutzungsmöglichkeiten für den Verriegelungsmechanismus, neben Laufrad-Pumpenwelle auch bei anderen Komponenten.
- der lösbare Verriegelungsmechanismus unterstützt Recycling gerechte Konstruktionen, da eine zerstörungsfreie Demontage der Befestigungskomponente ermöglicht wird. Somit verbleiben bei der Demontage keine "Rückstände" der Befestigungskomponente an der Gegenkomponente, was für das Recycling besonders bei unterschiedlichen Materialeien (Metall-Kunststoff) von Bedeutung ist.

Es sei darauf hingewiesen, dass die vorstehende Beschreibung lediglich beispielhaft zum Zwecke der Veranschaulichung gegeben ist und den Schutzbereich der Erfindung keineswegs einschränkt. Merkmale der Erfindung, die als "kann", "beispielhaft", "bevorzugt", "optional", "ideal", "vorteilhaft", "gegebenenfalls" oder "geeignet" angegeben sind, sind als rein fakultativ zu betrachten und schränken ebenfalls den Schutzbereich nicht ein, welcher ausschließlich durch die Ansprüche festgelegt ist. Soweit in der vorstehenden Beschreibung Elemente, Komponenten, Verfahrensschritte, Werte oder Informationen genannt sind, die bekannte, naheliegende oder vorhersehbare Äquivalente besitzen, werden diese Äquivalente von der Erfindung mit umfasst. Ebenso schließt die Erfindung jegliche Änderungen, Abwandlungen oder Modifikationen von Ausführungsbeispielen ein, die den Austausch, die Hinzunahme, die Änderung oder das Weglassen von Elementen, Komponenten, Verfahrensschritte, Werten oder Informationen zum Gegenstand haben, solange der erfindungsgemäße Grundgedanke erhalten bleibt, ungeachtet dessen, ob die Änderung, Abwandlung oder Modifikationen zu einer Verbesserung oder Verschlechterung einer Ausführungsform führt.

Obgleich die vorstehende Erfindungsbeschreibung eine Vielzahl körperlicher, unkörperlicher oder verfahrensgegenständlicher Merkmale in Bezug zu einem oder mehreren konkreten Ausführungsbeispiel(en) nennt, so können diese Merkmale auch isoliert von dem konkreten Ausführungsbeispiel verwendet werden, jedenfalls soweit sie nicht das zwingende Vorhandensein weiterer Merkmale erfordern. Umgekehrt können diese in Bezug zu einem oder mehreren konkreten Ausführungsbeispiel(en) genannten Merkmale beliebig miteinander sowie mit weiteren offenbarten oder nicht offenbarten Merkmalen von gezeigten oder nicht gezeigten Ausführungsbeispielen kombiniert werden, jedenfalls soweit sich die Merkmale nicht gegenseitig ausschließen oder zu technischen Unvereinbarkeiten führen.

### Bezugszeichenliste

- 1: Befestigungskomponente
- 2: Gegenkomponente, Welle
- 3: einseitiger Hebel
- 4: zweiseitiger Hebel
- 5: Gehäuseteil
- 6: Kammer
- 6a: erster Kammerbereich
- 6b: zweiter Kammerbereich
- 7: erster Arm
- 8: zweiter Arm
- 9: freies Ende des ersten Arms
- 10: freies Ende des zweiten Arms
- 11: Außenkontur
- 12: Schwenkachse
- 13: Schwenkachse
- 14: Zapfen
- 15: erster Schwenkzapfen
- 16: zweiter Schwenkzapfen
- 17: Ausnehmung in Gegenkomponente,
- 18: Sechskant-Erweiterung
- 19: Kammernische
- 20: Kammerrückwand
- 21: Kammeröffnung
- 22: Ausnehmung in Gegenkomponente, Ringnut
- 23: Spiel
- 24: Ausnehmung zur Schwenkzapfenaufnahme
- 25: Innenkreis
- 26: Außenkreis
- 27: Verdickung
- 28: Kanal
- 29: Schieber
- 30: Gleitschuh
- 31: Ausnehmung im Gleitschuh
- 32: Gleitzapfen
- 33: Steg
- 34: Blockierelement
- 35: Laufrad
- 36: Wellenadapter
- 37: Wellenachse
- 38: Aufnahmeraum des Gehäuses
- 39: Längsvertiefungen
- 40: Längsrippen
- 41: Aufnahmeraum des Wellenadapters für Pumpenwelle
- 42: Kopf
- 43: Aufbau
- 44: Zwischenabschnitt
- 45: Blockierzungen
- 46: Nasenförmiger Vorsprung
- 47: Hohlraum für Steg
- 48: Längsachse der Ausnehmung 31
- 49: Innenwand der Kammernische 19
- 50: abgeflachte Seitenwand

## Patentansprüche

1. Befestigungskomponente (1, 35) zur formschlüssigen Verbindung mit einer Gegenkomponente (2, 36) durch axiales Fügen, wobei, die Befestigungskomponente (1, 35) ein Gehäuseteil (5) mit wenigstens einer offenen Kammer (6) aufweist, in der zumindest ein Hebel (3, 4) einliegt, der in eine Verriegelungsposition mit der Gegenkomponente (2, 36) schwenkbar ist, **dadurch gekennzeichnet, dass** das Gehäuseteil (5) und der Hebel (3, 4) in einem gleichzeitigen Herstellungsschritt durch ein additives Verfahren hergestellt sind.

2. Befestigungskomponente (1, 35) nach Anspruch 1, **dadurch gekennzeichnet, dass** sie mehrere Hebel (3, 4) aufweist, die jeweils in eine verriegelnde Position mit der Gegenkomponente (2, 36) schwenkbar sind.

3. Befestigungskomponente (1, 35) nach Anspruch 1 oder 2, **dadurch gekennzeichnet, dass** der Hebel (3) zwei winklig zueinander stehende Arme (7, 8) aufweist, zwischen denen die Schwenkachse (12) liegt, wobei ein freies Ende (10) des zweiten Armes (8) vor dem Fügen aus der Kammer (6) herausragt und der Hebel (3) durch das Fügen derart geschwenkt wird, dass das freie Ende (9) des ersten Arms (7) in die Verriegelungsposition übergeht.

4. Befestigungskomponente (1, 35) nach Anspruch 3, **dadurch gekennzeichnet, dass** der Hebel (3) mit Spiel gelenkig gelagert ist.

5. Befestigungskomponente (1, 35) nach Anspruch 3 oder 4, **dadurch gekennzeichnet, dass** das freie Ende (10) des zweiten Arms (8) einen Vorsprung mit einer bogenförmigen Kontur (11) aufweist.

6. Befestigungskomponente (1, 35) nach einem der Ansprüche 3 bis 5, **dadurch gekennzeichnet, dass** der zweite Arm (8) auf seiner der Kammerrückwand (20) zugewandten Rückseite eine einen Anschlag zur Kammerrückwand (20) bildende Verdickung (27) aufweist.

7. Befestigungskomponente (1, 35) nach Anspruch 1 oder 2, **dadurch gekennzeichnet, dass** der Hebel (3) nur einen ersten Arm (7) aufweist, an dessen einem Ende die Schwenkachse (13) liegt und dessen freies anderes Ende (9) aus der Kammer (6) heraus bewegbar ist, um von einer unverriegelnden Position in die Verriegelungsposition überzugehen.

8. Befestigungskomponente (1, 35) nach Anspruch 7, **dadurch gekennzeichnet, dass** der Hebel (3) mit einem Schieber (29) in Wirkverbindung steht, um den Hebel (3) von der unverriegelnden Position in die Verriegelungsposition oder von der Verriegelungsposition in die unverriegelnde Position zu schwenken.

9. Befestigungskomponente (1, 35) nach Anspruch 8, **dadurch gekennzeichnet, dass** der Schieber (29) einen länglichen Gleitschuh (30) mit einer zum Hebel (3) gerichteten Ausnehmung (31) in Form eines Langlochs aufweist, in der ein Gleitzapfen (32) des Hebels (3) einliegt, der am freien Ende (9) des Arms (7) angeordnet ist, wobei die Längsachse der Ausnehmung (31) winklig zur Bewegungsrichtung des Schiebers (29) liegt.

10. Befestigungskomponente (1, 35) nach Anspruch 8 oder 9, **dadurch gekennzeichnet, dass** der Schieber (29) mit mehreren Hebeln (3) in Wirkverbindung steht, um diese Hebel (3) gleichzeitig zu schwenken.

11. Befestigungskomponente (1, 35) nach einem der Ansprüche 8 bis 10, **dadurch gekennzeichnet, dass** der Schieber (29) einen Steg (33) aufweist, an dessen Ende der Gleitschuh (30) ausgebildet ist.

12. Befestigungskomponente (1, 35) nach einem der Ansprüche 3 bis 11, **dadurch gekennzeichnet, dass** das freie Ende (9) des ersten Arms (7) einen riegelartigen Vorsprung zum Formschluss mit einer Ausnehmung (17, 22) in der Gegenkomponente (2, 36) aufweist.

13. Befestigungskomponente (1, 35) nach einem der vorherigen Ansprüche, **dadurch gekennzeichnet, dass** das Gehäuseteil (5) und der oder die Hebel (3, 4) schichtweise aus einem Pulverbett durch Verfestigung einzelner Pulverschichten hergestellt sind.

14. Befestigungskomponente (1, 35) nach einem der vorherigen Ansprüche, **dadurch gekennzeichnet, dass** zumindest ein Kanal (28) im Gehäuseteil (5) einerends zu dessen Außenseite hin offen ist und sich anderenends zur Schwenklagerungen des Hebels (3, 4) hin öffnet.

15. Befestigungskomponente (1, 35) nach einem der vorherigen Ansprüche, **dadurch gekennzeichnet, dass** das Gehäuseteil (5) eine Nabe und die Gegenkomponente (2) eine Welle bildet.

16. Befestigungskomponente (1, 35) nach einem der vorherigen Ansprüche, **dadurch gekennzeichnet, dass** sie ein mechanisches oder hydraulisches Bauteil, insbesondere ein Pumpenlaufrad (35) ist, dessen Nabe das Gehäuseteil (5) bildet.

17. Baugruppe (1,2) umfassend eine Befestigungskomponente (1) nach einem der vorherigen Ansprüche und eine Gegenkomponente (2), mit der die Befestigungskomponente (1) durch axiales Fügen formschlüssig verbunden ist.

## Claims

1. Fastening component (1, 35) for a positively fitting connection with a counter component (2, 36) by means of axial joining, in which the fastening component (1, 35) has a casing section (5) with at least one open chamber (6) in which at least one lever (3, 4) engages, which can swing to a locking position with the counter component (2, 36), **characterised by** the casing section (5) and the lever (3, 4) being fabricated in a simultaneous production step using an additive method.

2. Fastening component (1, 35) according to claim 1, **characterised by** having multiple levers (3, 4) that can respectively swing to a locking position with the counter component (2, 36).

3. Fastening component (1, 35) according to claim 1 or 2, **characterised by** the lever (3) having two arms (7, 8) at an angle to each other, between which the swivel axis (12) lies, in which a free end (10) of the second arm (8) projects from the chamber (6) before joining and the lever (3) swings during joining so that the free end (9) of the first arm (7) moves to the locking position.

4. Fastening component (1, 35) according to claim 3, **characterised by** the articulated mounting of the lever (3) with play.

5. Fastening component (1, 35) according to claim 3 or 4, **characterised by** the free end (10) of the second arm (8) having a projection with a curved contour (11).

6. Fastening component (1, 35) according to one of the claims 3 through 5, **characterised by** the second arm (8) on its reverse siding facing the back wall of the chamber (20) having a thicker section (27) forming a stop to the back wall of the chamber (20).

7. Fastening component (1, 35) according to claim 1 or 2, **characterised by** the lever (3) only having a first arm (7), at the end of which the swivel axis (13) lies and the free other end (9) of which can be moved out of the chamber (6) to move from an unlocked position to the locking position.

8. Fastening component (1, 35) according to claim 7, **characterised by** the lever (3) being effectively connected to a slider (29) to move the lever (3) from the unlocked position to the locking position or from the locking position to the unlocked position.

9. Fastening component (1, 35) according to claim 8, **characterised by** the slider (29) having an oblong slide shoe (30) with an opening (31) in the form of a slotted hole facing the lever (3) in which a sliding knuckle (32) of the lever (3) engages, which is arranged at the free end (9) of the arm (7), in which the longitudinal axis of the opening (31) lies at an angle to the movement direction of the slider (29).

10. Fastening component (1, 35) according to claim 8 or 9, **characterised by** the slider (29) being effectively connected to multiple levers (3) to move these levers (3) simultaneously.

11. Fastening component (1, 35) according to one of the claims 8 through 10, **characterised by** the slider (29) having a land (33) at the end of which the slide shoe (30) is formed.

12. Fastening component (1, 35) according to one of the claims 3 through 11, **characterised by** the free end (9) of the first arm (7) having a latch-like projection for form-fitting with an opening (17, 22) in the counter component (2, 36).

13. Fastening component (1, 35) according to one of the preceding claims, **characterised by** the casing section (5) and the lever(s) (3, 4) being fabricated in layers on a powder bed by solidifying single layers of powder.

14. Fastening component (1, 35) according to one of the preceding claims, **characterised by** at least one channel (28) in the casing section (5) that is open on one end towards the outside with the other end opening towards the pivot bearing of the lever (3, 4).

15. Fastening component (1, 35) according to one of the preceding claims, **characterised by** the casing section (5) forming a hub and the counter component (2) forming a shaft.

16. Fastening component (1, 35) according to one of the preceding claims, **characterised by** being a mechanical or hydraulic component, notably a pump impeller (35), the hub of which is formed by the casing section (5).

17. Assembly (1,2) comprising a fastening component (1) according to one of the preceding claims and a counter component (2) to which the fastening component (1) is form-fitted by means of axial joining.

## Revendications

1. Composant de fixation (1, 35) pour la connexion en ajustement de forme avec un composant opposé (2, 36) par jonction axiale, sachant que le composant de fixation (1, 35) présente une pièce de boîtier (5) avec au moins une chambre ouverte (6), dans laquelle se trouve au moins un levier (3, 4) pivotant en position de verrouillage avec le composant opposé (2, 36), **caractérisé en ce que** la pièce de boîtier (5) et le levier (3, 4) sont fabriqués en une seule étape de fabrication simultanée par un procédé additif.

2. Composant de fixation (1, 35) selon la revendication 1, **caractérisé en ce qu'il** présente plusieurs leviers (3, 4), chacun pivotant en position verrouillée avec le composant opposé (2, 36).

3. Composant de fixation (1, 35) selon la revendication 1 ou 2, **caractérisé en ce que** le levier (3) présente deux bras perpendiculaires (7, 8) entre lesquels se trouve l'axe de pivotement (12), sachant qu'une extrémité libre (10) du deuxième bras (8) avant la jonction dépasse de la chambre (6) et que le levier (3) est pivoté par la jonction de manière que l'extrémité libre (9) du premier bras (7) passe en position de verrouillage.

4. Composant de fixation (1, 35) selon la revendication 3, **caractérisé en ce que** le levier (3) est articulé avec du jeu.

5. Composant de fixation (1, 35) selon la revendication 3 ou 4, **caractérisé en ce que** l'extrémité libre (10) du second bras (8) présente une avancée avec un contour en forme d'arc (11).

6. Composant de fixation (1, 35) selon l'une des revendications 3 à 5, **caractérisé en ce que** le deuxième bras (8) sur son côté arrière orienté vers la paroi arrière de la chambre (20) présente un épaississement (27) formant butée par rapport à la paroi arrière de la chambre (20).

7. Composant de fixation (1, 35), selon la revendication 1 ou 2, **caractérisé en ce que** le levier (3) ne présente qu'un premier bras (7) à l'extrémité duquel se trouve l'axe de pivotement (13) et dont l'autre extrémité libre (9) peut bouger hors de la chambre (6) pour passer d'une position déverrouillée à une position verrouillée.

8. Composant de fixation (1, 35) selon la revendication 7, **caractérisé en ce que** le levier (3) est relié à un coulisseau (29) pour faire pivoter le levier (3) de la position déverrouillée à la position de verrouillage ou inversement.

9. Composant de fixation (1, 35), selon la revendication 8, **caractérisé en ce que** le coulisseau (29) présente un patin de glissement allongé (30) muni d'un évidement (31) orienté vers le levier (3) sous forme d'un trou oblong dans lequel se trouve une prise coulissante (32) du levier (3) disposée à l'extrémité libre (9) du bras (7), sachant que l'axe longitudinal de l'évidement (31) est perpendiculaire au sens de déplacement du coulisseau (29).

10. Composant de fixation (1, 35) selon la revendication 8 ou 9, **caractérisé en ce que** le coulisseau (29) est relié à plusieurs leviers (3) pour les faire pivoter simultanément.

11. Composant de fixation (1, 35) selon l'une des revendications 8 à 10, **caractérisé en ce que** le coulisseau (29) présente une traverse (33) à l'extrémité de laquelle est monté le patin de glissement (30).

12. Composant de fixation (1, 35) selon l'une des revendications 3 à 11, **caractérisé en ce que** l'extrémité libre (9) du premier bras (7) présente une avancée en forme de loquet avec un évidement (17, 22) pour un verrouillage positif avec le composant opposé (2, 36).

13. Composant de fixation (1, 35) selon l'une des revendications précédentes, **caractérisé en ce que** la partie du boîtier (5) et le ou les leviers (3, 4) sont fabriqués par couches à partir d'un lit de poudre par solidification de chaque couche de poudre.

14. Composant de fixation (1, 35) selon l'une des revendications précédentes, **caractérisé en ce qu'au** moins un canal (28) dans la partie du boîtier (5) est ouvert vers l'extérieur à son extrémité et s'ouvre à l'autre extrémité vers les paliers de pivotement du levier (3, 4).

15. Composant de fixation (1, 35) selon l'une des revendications précédentes, **caractérisé en ce que** la pièce de boîtier (5) forme un moyeu et le composant opposé (2) un arbre.

16. Composant de fixation (1, 35) selon l'une des revendications précédentes, **caractérisé en ce qu'il** est un composant mécanique ou hydraulique, en particulier un rotor de pompe (35), dont le moyeu forme la partie du boîtier (5).

17. Module (1, 2) comprenant un composant de fixation (1) selon l'une des revendications précédentes et un composant opposé (2) auquel le composant de fixation (1) est relié par une jonction axiale à ajustement de forme.
